# EUROPEAN PATENT APPLICATION

(11) **EP 4 086 579 A1**
(43) Date of publication of application: **09.11.2022**
(21) Application number: 21206303.6
(22) Date of filing: 03.11.2021
(51) Int. Cl.: G01C 21/36

(54) **SPEECH INTERACTION METHOD, APPARATUS AND SYSTEM, TRANSPORTATION MEANS, AND MEDIUM**

(30) Priority: 27.08.2021 CN 202110992225
(71) Applicant: Guangzhou Xiaopeng Motors Technology Co., Ltd., Guangzhou, Guangdong 510000 (CN)
(72) Inventor: ZHAO, Yongliang, Guangzhou (CN)
(74) Representative: Treeby, Philip David William

(57) **Abstract**

A speech interaction method, apparatus and system, a transportation means, and a storage medium are provided. A speech software development kit is preset on a map client of the transportation means. The speech interaction method includes: acquiring a speech request of a user, the speech request being related to a route preference of the user; receiving, after the speech software development kit receives a route change instruction generated and returned by a server in response to the speech request, an instruction callback issued by the speech software development kit based on the route change instruction; switching an on/off state of a route preference switch control on the map client based on the instruction callback; and generating a target planned route corresponding to the speech request based on the switched on/off state of the route preference switch control. The speech interaction method can use speech to control a route preference setting on the map client to replan a route, which keeps the user from being distracted by operations which can impact driving safety.

## Description

### Field of Invention

The present disclosure relates to the field of transportation, and in particular, to a speech interaction method, a speech interaction apparatus, a speech interaction system, a transportation means, and a computer-readable storage medium.

### Background

Under navigation guided pilot (NGP), surround reality (SR) for autonomous driving can only support dragging of a map by gestures, and cannot support switching of a route preference (a condition for selecting a planned route). If a user needs to switch a route preference, the user has to exit and enter a standard definition map (SD) first, and then perform a corresponding selection operation. However, it is inconvenient and unsafe to distract the user and allow him/her to switch the route preference by manually operating the map while driving a vehicle.

### Summary of Invention

In view of the foregoing problems, embodiments of the present disclosure provide a speech interaction method, a speech interaction apparatus, a speech interaction system, a transportation means, and a computer-readable storage medium.

The present disclosure provides a speech interaction method for a transportation means. The transportation means communicates with a server. A speech software development kit is preset on a map client of the transportation means. The speech interaction method includes:
acquiring a speech request of a user, the speech request being related to a route preference of the user;
receiving, after a route change instruction generated and returned by the server in response to the speech request is received by the speech software development kit, an instruction callback issued by the speech software development kit based on the route change instruction;
switching an on/off state of a route preference switch control on the map client based on the instruction callback; and
generating a target planned route corresponding to the speech request based on the switched on/off state of the route preference switch control.

In some embodiments, the step of acquiring the speech request of the user, the speech request being related to the route preference of the user, includes:
acquiring the speech request of the user when the map client is currently in a mode of surround reality, the speech request being related to the route preference of the user.

In some embodiments, the step of switching the on/off state of the route preference switch control on the map client based on the instruction callback includes:
controlling the map client to register and monitor, in a subscription mode, the instruction callback issued by the speech software development kit; and
controlling, when the instruction callback is detected, the on/off state of the corresponding route preference switch control based on the instruction callback.

In some embodiments, the step of controlling the on/off state of the corresponding route preference switch control based on the instruction callback includes:
converting the instruction callback into a speech control event in response to the instruction callback;
converting the speech control event to generate a modification command; and
executing the modification command to control the on/off state of the route preference switch control.

In some embodiments, after receiving the instruction callback issued by the speech software development kit based on a route change instruction, the speech interaction method further includes:
generating a command for exiting the surround reality for autonomous driving when the map client is currently in the mode of the surround reality for autonomous driving; and
controlling the map client to exit the surround reality for autonomous driving based on the command for exiting the surround reality for autonomous driving so as to display a standard map interface.

In some embodiments, the step of generating the target planned route corresponding to the speech request based on the switched on/off state of the route preference switch control includes:
determining at least one route that meets a condition corresponding to the on/off state of the route preference switch control as the target planned route.

In some embodiments, the speech interaction method further includes:
generating configuration information of the map client based on the on/off state of the route preference switch control; and
sending the configuration information to the server to enable the server to synchronize the configuration information to corresponding user information, wherein the map client is configured to acquire the configuration information in the corresponding user information from the server based on a current login user.

In some embodiments, after acquiring the speech request of the user, the speech interaction method includes:
sending the speech request to the server, so that when the speech request is related to the route preference of the user, the server performs matching for the speech request in a preset knowledge base in response to the speech request, and generates the route change instruction when a match exists; and
receiving, by the speech software development kit, the route change instruction returned by the server.

In some embodiments, the server generates feedback information when a match does not exist, and the speech interaction method further includes:
providing a voice and/or display reminder in response to the feedback information sent by the server.

The present disclosure further provides a speech interaction apparatus. A transportation means communicates with a server, a speech software development kit being preset on a map client of the transportation means. The speech interaction apparatus includes:
an acquisition module, configured to acquire a speech request of a user, the speech request being related to a route preference of the user;
a first generation module, configured to receive, after the speech software development kit receives a route change instruction generated and returned by the server in response to the speech request, an instruction callback issued by the speech software development kit based on the route change instruction;
a control module, configured to switch an on/off state of a route preference switch control on the map client based on the instruction callback; and
a second generation module, configured to generate a target planned route corresponding to the speech request based on the switched on/off state of the route preference switch control.

The present disclosure further provides a speech interaction system, including a transportation means and a server. The transportation means includes a map client, a speech software development kit being preset on the map client;
the map client is configured to acquire a speech request of a user, and transmit the speech request to the server through the speech software development kit;
the server is configured to receive the speech request from the map client, generate a route change instruction based on the speech request, and transmit the route change instruction back to the transportation means; and
the map client is further configured to receive, after the speech software development kit receives the route change instruction generated and returned by the server in response to the speech request, an instruction callback issued by the speech software development kit based on the route change instruction, switch an on/off state of a route preference switch control on the map client based on the instruction callback, and generate a target planned route corresponding to the speech request based on the switched on/off state of the route preference switch control.

In some embodiments, the server includes a preset knowledge base and is configured to:
perform semantic recognition on the speech request to obtain text data;
perform matching for the text data in the preset knowledge base; and
generate the route change instruction when a match for the text data exists in the preset knowledge base; or
generate feedback information when a match for the text data does not exist in the preset knowledge base.

The present disclosure further provides a transportation means, including a memory and a processor. A computer program is stored in the memory. The computer program, when executed by the processor, implements the speech interaction method of any one of the above.

The present disclosure further provides a non-volatile computer-readable storage medium for a computer program. The computer program, when executed by one or more processors, implements the speech interaction method of any one of the above-mentioned embodiments.

In the speech interaction method, the speech interaction apparatus, the speech interaction system, the transportation means, and the computer-readable storage medium according to the present disclosure, by presetting a speech software development kit on a map client, when the map client obtains a speech request related to a route preference, the speech request may be transmitted to a server through the speech software development kit, so that the server responds after receiving the speech request, generates a route change instruction, and transmits the route change instruction back to the speech software development kit. Then, the speech software development kit generates a corresponding instruction callback based on the route change instruction, and the map client receives the instruction callback issued by the speech software development kit and switches an on/off state of a route preference switch control, and finally generates a target planned route corresponding to the speech request based on the switched on/off state of the route preference switch control. As such, a user can switch a route preference in the map client by speech and regenerate a planned route.

Additional aspects and advantages of the embodiments of the present disclosure will be illustrated in the following description, and some of them will become self-evident from the following description, or from the implementation of the present disclosure.

### Brief Description of Drawings

The above and/or additional aspects and advantages of the present disclosure will become apparent and easily understood from the description of the embodiments in combination with the accompanying drawings below. In the drawings:
Fig. 1 is a schematic flowchart of a speech interaction method according to some embodiments of the present disclosure;
Fig. 2 is a schematic module diagram of a speech interaction apparatus according to some embodiments of the present disclosure;
Fig. 3 is a navigation scenario on a map client according to some embodiments of the present disclosure; and
Figs. 4 to 11 are schematic flowcharts of speech interaction methods according to some embodiments of the present disclosure.

### Detailed Description

The embodiments of the present disclosure are described in detail below, and examples of the embodiments are shown in the accompanying drawings, in which the same or similar reference numerals throughout the text indicate the same or similar elements or elements having the same or similar functions. The embodiments described below by reference to the accompanying drawings are exemplary and are merely intended to explain the embodiments of the present disclosure and are not to be construed as limiting the embodiments of the present disclosure.

The NGP means that a vehicle can travel from point A to point B based on a navigation route set by a user. The NGP function covers use scenarios such as autonomous overtaking, automatic speed limit adjustment, optimal lane selection, automatic highway switching, automatic on-ramp and off-ramp, lane change and automatic emergency avoidance, etc., and can achieve better performance in China road scenarios such as traffic cone identification and avoidance, avoidance from large trucks, night overtaking reminder, avoidance from faulty vehicles, and super car following on congested roads. The realization of all these depends not only on the development level of these technical solutions, but also on an indispensable third-generation navigation that can implement human-machine co-navigation. The navigation can provide more accurate road information to the NGP to optimize the experience of autonomous driving assistance.

As a high-level autonomous driving assistance function, compared with ordinary in-vehicle navigation, the NGP has more requirements and standards for the third-generation navigation that can perform human-machine co-navigation, including integrity, richness, human-machine interaction, high precision, freshness, reliability, navigating, positioning, etc., and has higher requirements on coverage.

On this basis, autonomous driving sensing, a positioning system, a high-precision map and a high-definition rendered image are fused for reality display so as to perform the function of "surround reality (SR) for autonomous driving" implemented in mass-produced vehicles. When the NGP is used, surround reality can show boundaries and division of responsibilities of manual or autonomous driving, and enables, through accurate risk scene recognition and clear hierarchical takeover reminders, a driver to clearly know when he/she needs to take over the vehicle. In addition, the function further integrates dynamic traffic data and environment perception data, including real-time feedback on information such as real-time traffic information, lane-level road conditions, event information services, traffic prediction, etc., thereby bringing users superior experiences of lane-level automatic navigation.

However, when some operations are performed under surround reality, a map client will exit to a standard map interface of conventional in-vehicle navigation.

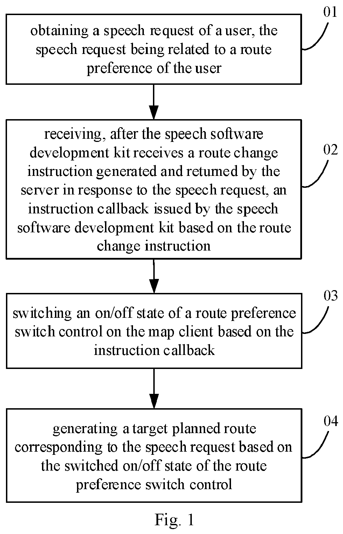

Referring to Fig. 1, the present disclosure provides a speech interaction method for a transportation means. A speech software development kit is preset on a map client of the transportation means. The speech interaction method includes the following steps.

In step 01, a speech request of a user is acquired, the speech request being related to a route preference of the user.

In step 02, after the speech software development kit receives a route change instruction generated and returned by a server in response to the speech request, an instruction callback issued by the speech software development kit based on the route change instruction is received.

In step 03, an on/off state of a route preference switch control on the map client is switched based on the instruction callback.

In step 04, a target planned route corresponding to the speech request is generated based on the switched on/off state of the route preference switch control.

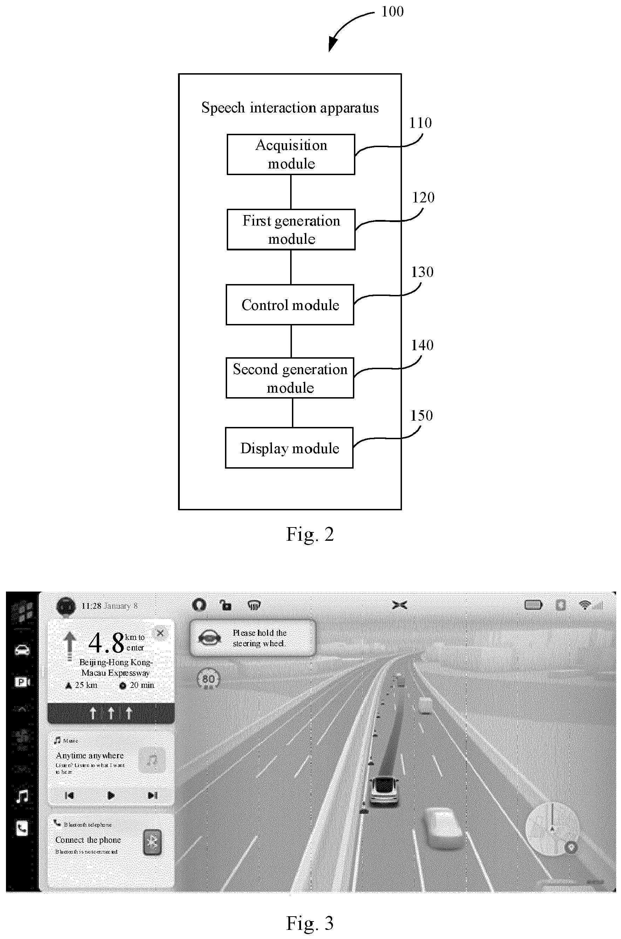

Accordingly, referring to Fig. 2, embodiments of the present disclosure further provide a speech interaction apparatus 100. The speech interaction method according to the present embodiment may be implemented by the speech interaction apparatus 100.

The speech interaction apparatus 100 includes an acquisition module 110, a first generation module 120, a control module 130 and a second generation module 140. Step 01 may be implemented by the acquisition module 110; step 02 may be implemented by the first generation module 120; step 03 may be implemented by the control module 130; and step 04 may be implemented by the second generation module 140. In other words, the acquisition module 110 is configured to acquire a speech request of a user, the speech request being related to a route preference of the user. The first generation module 120 is configured to receive, after the speech software development kit receives a route change instruction generated and returned by a server in response to the speech request, an instruction callback issued by the speech software development kit based on the route change instruction. The control module 130 is configured to switch an on/off state of a route preference switch control on a map client based on the instruction callback. The second generation module 140 is configured to generate a target planned route corresponding to the speech request based on the switched on/off state of the route preference switch control.

Embodiments of the present disclosure further provide a transportation means. The transportation means includes a memory and a processor. A computer program is stored in the memory. The processor is configured to acquire a speech request of a user, the speech request being related to a route preference of the user. The processor is configured to receive, after the speech software development kit receives a route change instruction generated and returned by a server in response to the speech request, an instruction callback issued by the speech software development kit based on the route change instruction. The processor is configured to switch an on/off state of a route preference switch control on a map client based on the instruction callback. The processor is further configured to generate a target planned route corresponding to the speech request based on the switched on/off state of the route preference switch control.

In the speech interaction method, the speech interaction apparatus, the transportation means, and the computer-readable storage medium according to the present disclosure, by presetting a speech software development kit on a map client, when the map client obtains a speech request related to a route preference, the speech request may be transmitted to a server through the speech software development kit, so that the server responds after receiving the speech request, generates a route change instruction, and transmits the route change instruction back to the speech software development kit. Then, the speech software development kit generates a corresponding instruction callback based on the route change instruction, and the map client receives the instruction callback generated by the speech software development kit switches an on/off state of a route preference switch control based on the instruction callback, and finally generates a target planned route corresponding to the speech request based on the switched on/off state of the route preference switch control. As such, a user can switch a route preference in the map client by speech and regenerate a planned route.

Specifically, the transportation means includes a screen with a graphical user interface display, and a speech recognition device capable of performing speech interaction. The transportation means may include a vehicle, a flying car, a high-speed train, etc. Taking a vehicle as an example, the vehicle includes a display area, an electro-acoustic element, a communication element and a processor. The display area of the vehicle may include an instrument screen, an in-vehicle display screen, a head-up display that may be implemented on a windshield of the vehicle, etc. An in-vehicle system running on the vehicle uses a graphical user interface (GUI) to present a displayed content to the user. The display area includes many UI elements, and different display areas may display the same or different UI elements. The UI elements may include a card object, an application icon or interface, a folder icon, a multimedia file icon, an operable control for interaction, etc. The electro-acoustic element may be configured to collect a speech request of a user. The in-vehicle system may send a speech request and navigation scenario information to the server through the communication element, and receive, through the communication element, an operation instruction generated by the server based on the speech request. The processor is configured to perform an operation corresponding to the operation instruction.

For ease of understanding, an embodiment is described below by taking a vehicle as an example.

Specifically, a speech software development kit is preset on a map client of the vehicle. The map client refers to an in-vehicle map navigation application. When the map client is running, navigation scenario information of the map client may be displayed in real time in a display area of the vehicle. The software development kit (SDK) refers to a kit developed to perform a certain function of a software product. The navigation scenario information of the map client may be synchronized to a server through a speech software development kit which is a hub of speech interaction between the vehicle and the server. On the one hand, the speech software development kit defines a speech request generation specification. On the other hand, the speech software development kit can synchronize the navigation scenario information in the vehicle to the server, and transmit to the map client an operation instruction generated by the server based on the speech request.

The map client may introduce the speech software development kit to build.gradle into a project in the following way:
api(project.getDependency('com.xiaopeng,lib:lib speech protocol: 1.16.0-SNAPSHOT')){ changing =true}.

When the vehicle travels under the control of NGP, and when a navigation scenario running on the map client is surround reality (SR) for autonomous driving and the map client needs to make an adjustment based on the user's route preference, the map client needs to exit from the surround reality and display a conventional standard map interface, and then a route preference operation is completed by touching and clicking a corresponding control in the conventional standard map interface. The map client may acquire the user's speech request through the speech software development kit, i.e., when the navigation scenario is surround reality, the speech software development kit acquires the speech request related to the user's route preference.

Referring to Fig. 3, for example, when the vehicle travels under the control of NGP, and the map client is in a navigation scenario of surround reality for autonomous driving, if the user wants the map client to change a navigation route and issues a speech request of "avoid congestion", the map client may acquire the user's speech request of "avoid congestion" through the speech software development kit, and transmit the speech request to the server, and the server parses the speech request.

After acquiring the user's speech request, the map client may transmit the speech request to the server through the speech software development kit, and the server generates a route change instruction in response to the speech request.

It can be understood that for a map client, in a navigation scenario of surround reality for autonomous driving, a user can only perform switching of a route currently used to another route for navigation by exiting from a current surround reality for autonomous driving to a standard map interface by an input (such as a click) via a graphical user interface of the navigation scenario, and then performing a speech interaction under the standard map interface. When the vehicle is currently in a driving mode, the user interacts through the graphical user interface of the map client by touching and clicking while driving, which poses safety risks.

In some embodiments, the vehicle may further send navigation scenario information together with the speech request to the server. It can be understood that the navigation scenario information enables an interactive scenario where the vehicle is currently in to be more clearly know to the server when the server performs speech recognition and semantic parsing, thus effectively limiting the scope of semantic parsing. For example, when the map client is in a navigation scenario, traffic is gradually congested when the user drives with assistance of navigation in a navigation scenario with a shortest route distance. The user would want to avoid congestion and switch the navigation route from the current route to a route with less congestion and keep going to the destination, in which case the user sends a speech request of "avoid congestion". If the server fails to synchronously acquire the navigation scenario information, the server may generate, during the semantic parsing, an instruction deviating from the route change instruction, for example, an instruction for broadcasting whether a road ahead is congested or not. In the case that the server synchronously acquires the navigation scenario information, the server may determine that the user hopes to adjust the navigation route based on the route preference of "avoid congestion", thereby controlling the vehicle to travel with navigation to the destination along the adjusted route with less congestion. As such, intelligence of speech control and success rates of achieving real intentions can be improved, thus delivering improved user experiences.

Further, after the server generates the corresponding route change instruction based on the speech request, the server may transmit the route change instruction back to the speech software development kit. After receiving the route change instruction, the speech software development kit generates a corresponding instruction callback based on the route change instruction.

The control usually includes but is not limited to the following information: a control identification, a control type and a control action type. The control identification is unique to each control, and the control can be found using the identification. Control types may include groups, texts, images, etc. Control action types may include clicking, sliding, etc.

The control information includes one or more of a road condition information window, a control indicating enabling navigation, a control indicating exiting from a navigation scenario, a control indicating a special location icon, a control indicating a route preference, a control indicating setting of points passed by on a navigation route, a control indicating navigation viewing angle switching and a control indicating preview of a navigation route.

In this embodiment, switch controls used by the map client to indicate route preferences include switch controls for selecting route preferences, such as a congestion avoidance switch control, a toll avoidance switch control, a highway avoidance switch control and a highway first switch control. The congestion avoidance switch control is configured to enable or disable congestion avoidance; the toll avoidance switch control is configured to enable or disable toll avoidance; the highway avoidance switch control is configured to enable or disable highway avoidance; and the highway first switch control is configured to enable or disable highway first. When the route switch control is enabled, it means that the route preference setting is effective; and similarly, when the route switch control is disabled, it means that the route preference setting is invalid.

After receiving the instruction callback issued by the speech software development kit based on the route change instruction, the map client may switch the on/off state of each route preference switch control in response to the instruction callback, and finally the map client may perform route planning based on the on/off state of each route preference switch control and generate the target planned route corresponding to the speech request.

For example, if the instruction callback issued by the speech software development kit based on the route change instruction indicates highway avoidance, then after receiving the instruction callback indicating highway avoidance, the map client sets the on/off state of the highway avoidance switch control to be on, re-plans and generates a target planned route avoiding highway based on the on/off state of the highway avoidance switch control and the on/off states of other switch controls for selecting a route preference.

In addition, in the present disclosure, a driver may perform speech interaction with the map client at any time during driving, for example, in a driving or parking state. Especially in the driving state, interaction with the map client is implemented by way of speech input instead of the user's manual input, which can better ensure driving safety.

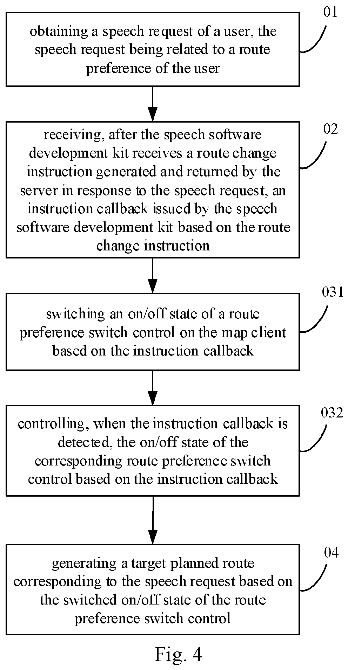

Preferably, referring to Fig. 4, in some embodiments, step 03 includes the following steps.

In step 031, the map client is controlled to register and monitor, in a subscription mode, the instruction callback issued by the speech software development kit.

In step 032, when the instruction callback is detected, the on/off state of the corresponding route preference switch control is controlled based on the instruction callback.

In some embodiments, steps 031 and 032 may be implemented by the control module 130. In other words, the control module 130 is configured to control the map client to register and monitor, in a subscription mode, the instruction callback issued by the speech software development kit, and control the on/off state of the corresponding route preference switch control based on the instruction callback when the instruction callback is detected.

In some embodiments, the processor is configured to control the map client to register and monitor, in a subscription mode, the instruction callback issued by the speech software development kit, and control the on/off state of the corresponding route preference switch control based on the instruction callback when the instruction callback is detected.

In sub-step 031, the map client may register and monitor, in a subscription mode, the instruction callback issued by the speech software development kit. The subscription mode is as follows:
private AbsNaviListener mNaviListener=new NaviListeneriImp(navilmodel:this);//Global speech processing
SpeechUntils.Subscribe(NaviNode.class,mNaviListener).

After detecting the instruction callback issued by the speech software development kit based on the route change instruction, the map client controls the on/off state of the route preference switch control based on the instruction callback in response to the instruction callback.

For example, in some examples, the speech software development kit receives a congestion avoidance instruction, obtains an instruction callback through conversion and issues the instruction callback; and when detecting the instruction callback indicating congestion avoidance issued by the speech software development kit, the map client may set the on/off state of the congestion avoidance switch control to be on in response to the instruction callback indicating congestion avoidance.

As such, the map client may perform route planning based on the on/off state of each route preference switch control and generate a target planned route.

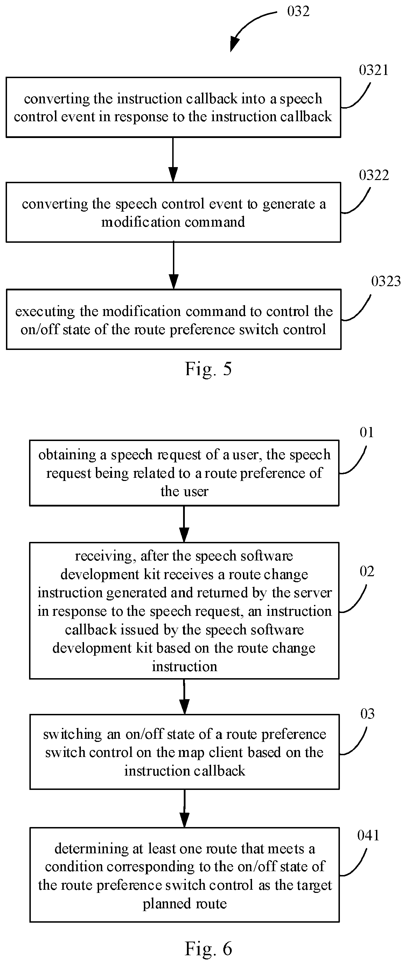

Preferably, referring to Fig. 5, in some embodiments, step 032 includes the following steps.

In step 0321, the instruction callback is converted into a speech control event in response to the instruction callback.

In step 0322, the speech control event is converted to generate a modification command.

In step 0323, the modification command is executed to control the on/off state of the route preference switch control.

In some embodiments, sub-steps 0321 to 0323 may be implemented by the control module 130. In other words, the control module 130 is configured to convert the instruction callback into a speech control event in response to the instruction callback, convert the speech control event to generate a modification command, and execute the modification command to control the on/off state of the route preference switch control.

In some embodiments, the processor is configured to convert the instruction callback into a speech control event in response to the instruction callback, convert the speech control event to generate a modification command, and execute the modification command to control the on/off state of the route preference switch control.

In some examples, if the instruction callback indicates congestion avoidance (onDriveAvoidCongestion), then the map client responds after detecting "onDriveAvoidCongestion", converts the instruction callback intoSPEECH_CMD_DRIVE_ AVOID_CONGESTION event (a speech control event), generates a modification command (Modify Setting Command), which is labeled as AVOID_CONGESTION, from the SPEECH_CMD_DRIVE_AVOID CONGESTION event, and finally set the congestion avoidance switch control to be on based on the labeled AVOID_CONGESTION.

Preferably, referring to Fig. 6, in some embodiments, step 04 includes the following step.

In step 041, at least one route that meets a condition corresponding to the on/off state of the route preference switch control is determined as the target planned route.

In some embodiments, step 041 may be implemented by the second generation module 140. In other words, the second generation module 140 is configured to determine at least one route that meets a condition corresponding to the on/off state of the route preference switch control as the target planned route.

In some embodiments, the processor is configured to determine at least one route that meets a condition corresponding to the on/off state of the route preference switch control as the target planned route.

The map client may switch on/off states of multiple route preference switch controls simultaneously and separately based on the instruction callback. On/off states of the route preference switch controls include but are not limited to: "enabling congestion avoidance", "disabling congestion avoidance", "enabling toll avoidance", "disabling toll avoidance", "enabling highway avoidance", "disabling highway avoidance", "enabling highway first", and "disabling highway first". The on/off states of the multiple route preference switch controls may include but are not limited to "enabling congestion avoidance and enabling toll avoidance", "enabling congestion avoidance, enabling toll avoidance and enabling highway avoidance", "enabling toll avoidance and enabling highway avoidance", "enabling congestion avoidance and enabling highway first", etc. There is a mutually exclusive relationship between "enabling congestion avoidance" and "enabling highway first", and between "enabling highway avoidance" and "enabling highway first".

Specifically, navigation scenario information on a standard map interface is acquired, a current position and a target position of the vehicle and on/off states of the route preference switch controls are determined based on content on the standard map interface, and finally, at least one route that meets a condition corresponding to the on/off state of each route preference switch control is determined as the target planned route.

In this embodiment, there may be a plurality of target planned routes. For example, there may be two, three, four or more target planned routes. As such, the user may select any one of the target planned routes as the current navigation route. Certainly, if the user does not make a selection from the target planned routes, a first target planned route may be used as the current navigation route by default after a predetermined time.

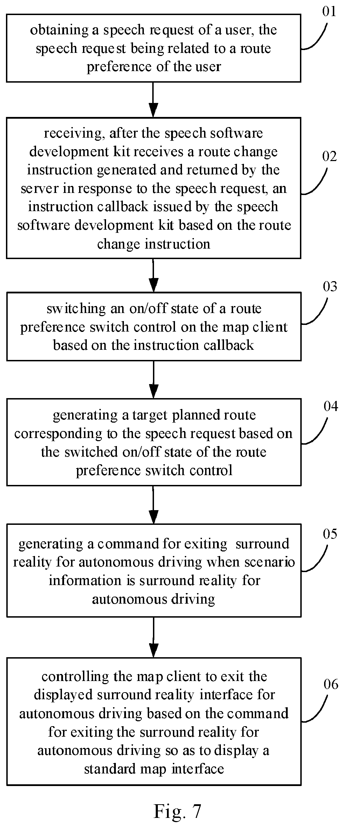

Referring to Fig. 7, in some embodiments, the speech interaction method further includes the following steps.

In step 05, when the map client is currently in surround reality for autonomous driving, a command for exiting the surround reality for autonomous driving is generated.

In step 06, the map client is controlled to exit the surround reality for autonomous driving based on the command for exiting the surround reality for autonomous driving so as to display a standard map interface.

In some embodiments, step 05 may be implemented by the second generation module 140, and step 06 may be implemented by the control module 130. In other words, the second generation module 140 is configured to generate a command for exiting surround reality for autonomous driving when the scenario information is the surround reality for autonomous driving, and the control module 130 is configured to control the map client to exit the surround reality for autonomous driving based on the command for exiting surround reality for autonomous driving so as to display a standard map interface.

In some embodiments, the processor is configured to generate a command for exiting surround reality for autonomous driving when the scenario information of the map client is the surround reality for autonomous driving, and control the map client to exit the surround reality for autonomous driving based on the command for exiting surround reality for autonomous driving so as to display a standard map interface.

Further referring to Fig. 3, it should be noted that in the present disclosure, if the vehicle starts the NGP service during driving, the navigation scenario of the map client can be automatically switched to the surround reality for autonomous driving. Under the surround reality for autonomous driving, changes in surrounding information of the vehicle can be simulated in real time, which allows the user to see a driving condition of the vehicle under autonomous driving at any time. If route change switching is required, it is necessary to exit the surround reality for autonomous driving to the standard map interface, and then a corresponding switch operation can be performed.

Therefore, when the navigation scenario of the map client is surround reality for autonomous driving, after the map client registers and monitors the instruction callback issued by the speech software development kit based on the route change instruction, a command for exiting the surround reality for autonomous driving may be generated, and the surround reality for autonomous driving is exited based on the command for exiting surround reality for autonomous driving so as to display a standard map interface.

As such, the user can determine, based on the standard map interface displayed on the map client, whether the vehicle executes the speech request.

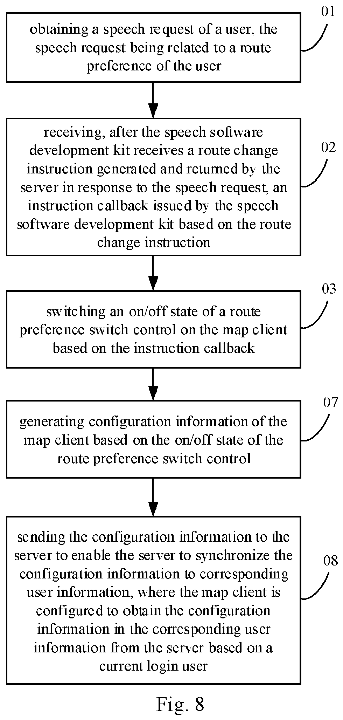

Preferably, referring to Fig. 8, in some embodiments, after step 03, the speech interaction method further includes the following steps.

In step 07, configuration information of the map client is generated based on the on/off state of the route preference switch control.

In step 08, the configuration information is sent to the server to enable the server to synchronize the configuration information to corresponding user information, and the map client is configured to acquire the configuration information in the corresponding user information from the server based on a current login user.

In some embodiments, step 07 may be implemented by the second generation module 140, and step 08 may be implemented by the control module 130. In other words, the second generation module 140 is further configured to generate configuration information of the map client based on the on/off state of the route preference switch control. The control module 130 is further configured to send the configuration information to the server to enable the server to synchronize the configuration information to corresponding user information, and the map client is configured to acquire the configuration information in the corresponding user information from the server based on a current login user.

In some embodiments, the processor is configured to generate configuration information of the map client based on the on/off state of the route preference switch control. The processor is further configured to send the configuration information to the server to enable the server to synchronize the configuration information to corresponding user information, and the map client is configured to acquire the configuration information in the corresponding user information from the server based on a current login user.

Specifically, the map client is configured to acquire, based on an account of the current login user, configuration information associated with the account from a user center server (a server that records information such as a user account, personal information, frame number of the purchased vehicle, etc.), so as to modify a local database based on the configuration information. As such, after the user logs into the user account at a map client of a different vehicle, the map client may modify configuration of the map client in a local database based on configuration information associated with the account acquired from the user center server, so that the configuration of the map client conforms to the user's habits, thereby improving user experience. Moreover, after the user account is logged in at the map client, each time the on/off state of the route preference switch control is changed, the configuration information of the map client may be transmitted to the server to synchronize the configuration information to the corresponding user information, so that the user information in the cloud is synchronized with the configuration information of the map client at which the user account is logged in. As such, after the user logs into the user account at the map client, the map client can be synchronized with the configuration information in the corresponding user information in the server.

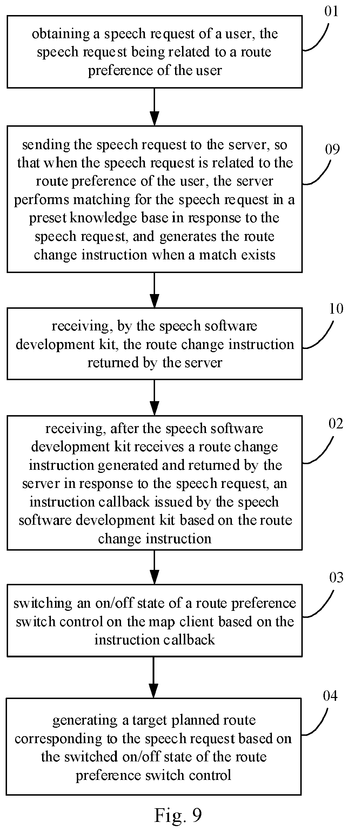

Preferably, referring to Fig. 9, in some embodiments, after step 01, the speech interaction method further includes the following steps.

In step 09, the speech request is sent to the server, so that when the speech request is related to the route preference of the user, the server performs matching for the speech request in a preset knowledge base in response to the speech request, and generates the route change instruction when a match exists.

In step 10, the speech software development kit receives the route change instruction returned by the server.

In some embodiments, steps 09 and 10 may be implemented by the control module 130. In other words, the control module 130 is further configured to: send the speech request to the server, so that when the speech request is related to the route preference of the user, the server performs matching for the speech request in a preset knowledge base in response to the speech request and generates the route change instruction when a match exists; and receive, through the speech software development kit, the route change instruction returned by the server.

In some embodiments, the processor is configured to send the speech request to the server, so that when the speech request is related to the route preference of the user, the server performs matching for the speech request in a preset knowledge base in response to the speech request, and generates the route change instruction when a match exists. The processor is further configured to receive, through the speech software development kit, the route change instruction returned by the server.

The server may perform a generalization operation on a speech request corresponding to each route change instruction, so that each route change instruction may correspond to a plurality of speech requests. The generalization operation includes, but is not limited to, generalization of synonyms and near-synonyms corresponding to the speech request.

It can be understood that due to effects of the user's accent, speaking habits, in-vehicle environment, radio, music, etc., the speech request may not completely correspond to the route change instruction, and consequently the speech request cannot match the route change instruction. Therefore, a generalization operation is performed on a speech request corresponding to each route change instruction. As such, the intelligence of speech control and the success rate of achieving real intentions can be further improved, thus delivering an improved user experience.

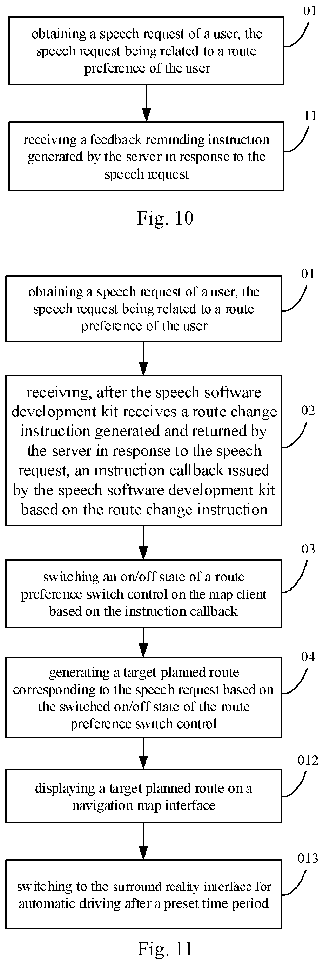

Referring to Fig. 10, in some embodiments, the server generates feedback information when a match does not exist, and the speech interaction method further includes the following steps.

In step 11, a voice and/or display reminder is provided in response to the feedback information sent by the server.

Further referring to Fig. 2, in some embodiments, the speech interaction apparatus further includes a display module 150. Step 11 may be implemented by the display module 150. In other words, the display module 150 may be configured to provide a voice and/or display reminder in response to the feedback information sent by the server.

In some embodiments, the processor may further be configured to provide a voice and/or display reminder in response to the feedback information sent by the server.

Specifically, when text data generated by the server based on the speech request does not match a preset route change instruction (for example, there is no preset route change instruction corresponding to the text data in the knowledge base), then in the case that a match does not exist, feedback information indicating failed matching may be generated and transmitted back to the vehicle, and the map client may provide a voice and/or display reminder in response to the feedback information sent by the server. The voice reminder may be a voice broadcast, and the display reminder may be a UI reminder, such as a message popup reminder. For example, if the feedback information is a voice broadcast, the vehicle may send a voice broadcast in response to a voice broadcast instruction to prompt the user.

As such, when the map client cannot execute the user's speech request related to a route preference, a voice broadcast or a display reminder may be provided to prompt the user, so that the user can learn that the vehicle cannot execute the corresponding speech request.

Preferably, referring to Fig. 11, in some embodiments, the speech interaction method further includes the following steps.

In step 012, a target planned route is displayed on a standard map interface.

In step 013, switching to surround reality for autonomous driving is performed after a preset time period.

Further referring to Fig. 2, in some embodiments, steps 012 and 013 may be implemented by the display module 150. In other words, the display module 150 is configured to display a target planned route on a standard map interface, and perform switching to surround reality for autonomous driving after a preset time period.

In some embodiments, the processor is configured to display a target planned route on a standard map interface, and perform switching to surround reality for autonomous driving after a preset time period.

The standard map interface may display a plurality of target planned routes. In some embodiments, the plurality of target planned routes may be displayed on the standard map interface in a full view mode, so that the user can determine from a full view angle whether to take a target planned route. In some other embodiments, the plurality of target planned routes may be sequenced and displayed on the standard map interface based on a preset rule. The preset rule may be a least time consuming rule, a shortest distance rule, and other rules.

Further, after the generated target planned route is displayed on the standard map interface for a preset time period, if the vehicle is currently still in NGP, the map client is controlled to automatically enter surround reality for autonomous driving.

The present disclosure further provides a speech interaction system, including a transportation means and a server. The transportation means includes a map client. A speech software development kit is preset on the map client.

The map client is configured to acquire a speech request related to a route preference, and transmit the speech request to the server through the speech software development kit.

The server is configured to receive the speech request from the map client, perform semantic parsing to generate text data, generate a route change instruction based on the text data, and send the route change instruction to the transportation means.

The map client is further configured to receive an instruction callback issued by the speech software development kit based on the route change instruction after the speech software development kit receives the route change instruction generated and returned by the server in response to the speech request, control an on/off state of a route preference switch control on the map client based on the instruction callback, and generate a target planned route corresponding to the speech request based on the switched on/off state of the route preference switch control.

In the speech interaction system according to the present disclosure, the speech software development kit is preset on the map client of the transportation means; when obtaining the speech request related to the route preference, the transportation means can transmit the speech request to the server; the server responds after receiving the speech request and performs semantic recognition on the speech request to generate the user route change instruction and transmits the route change instruction back to the speech software development kit; the speech software development kit converts the route change instruction and issues an instruction callback of the route change instruction based on the route change instruction; the map client is controlled based on the instruction callback to switch the on/off state of the route preference switch control, and finally the target planned route corresponding to the speech request is generated based on the switched on/off state of the route preference switch control. As such, the route preference in the map client is switched by speech to regenerate the planned route. This greatly improves user experience, and enhances vehicle safety.

In some embodiments, the server includes a preset knowledge base. The server is configured to perform semantic recognition on the speech request to obtain text data, perform matching for the text data in the preset knowledge base, and generate the route change instruction when a match for the text data exists in the preset knowledge base, or generate feedback information when a match for the text data does not exist in the preset knowledge base.

Embodiments of the present disclosure further provide a non-volatile computer-readable storage medium having a computer program stored thereon. The computer program, when executed by one or more processors, implements the speech interaction method according to any one of the above-mentioned embodiments. Those skilled in the art can understand that the implementation of all or some of the steps in the methods of the above embodiments can be completed by means of a computer program instructing associated software. The program may be stored on a non-volatile computer-readable storage medium, and may implement, when executed, the steps as described in the method embodiments above. The storage medium may be a magnetic disk, an optical disc, a read-only memory (ROM), or the like.

In the description of the present specification, the description with reference to the terms "an embodiment", "some embodiments", "exemplary embodiment", "example", "specific example" or "some examples" means that the specific features, structures, materials or characteristics described in combination with the embodiment or example are included in at least one embodiment or example of the present disclosure. In the present specification, the schematic representation of the above terms does not necessarily refer to the same embodiment or example. Moreover, the specific features, structures, materials, or characteristics described may be combined in a suitable manner in any one or more embodiments or examples. In addition, those skilled in the art may combine different embodiments or examples and features of different embodiments or examples described in the present specification together without conflicting with each other. Meanwhile, the description with reference to the terms "first", "second" and the like is intended to distinguish the same type of operations or similar operations. The terms "first" and "second" may be in a logical relationship in some embodiments, and may not necessarily be in a logical relationship in some other embodiments; and such a relationship needs to be determined depending on the actual embodiment, and should not be determined only by the literal meaning.

Any process or method description in the flowcharts or otherwise described herein may be understood to represent a module, a fragment, or a portion of codes including one or more executable instructions for implementing steps of a particular logical function or process, and the scope of the preferred embodiment of the present disclosure includes additional embodiments. Functions may not be performed in the order shown or discussed, including performing according to the functions involved in a substantially simultaneous manner or in a reverse order, as should be understood by those skilled in the art to which the embodiments of the present disclosure belong.

Although embodiments of the present disclosure have been shown and described above, it should be understood that the above embodiments are exemplary and are not to be construed as limiting the present disclosure, and that those of ordinary skills in the art may make changes, modifications, substitutions and variations to the above embodiments within the scope of the present disclosure.

## Claims

1. A speech interaction method for a transportation means, wherein the transportation means communicates with a server, a speech software development kit is preset on a map client of the transportation means, and the speech interaction method comprises:
acquiring a speech request of a user, the speech request being related to a route preference of the user;
receiving, after the speech software development kit receives a route change instruction generated and returned by the server in response to the speech request, an instruction callback issued by the speech software development kit based on the route change instruction;
switching an on/off state of a route preference switch control on the map client based on the instruction callback; and
generating a target planned route corresponding to the speech request based on the switched on/off state of the route preference switch control.

2. The speech interaction method of claim 1, wherein said acquiring the speech request of the user, the speech request being related to the route preference of the user, comprises:
acquiring the speech request of the user when the map client is currently in a mode of surround reality, the speech request being related to the route preference of the user.

3. The speech interaction method of claim 2, wherein said switching the on/off state of the route preference switch control on the map client based on the instruction callback comprises:
controlling the map client to register and monitor, in a subscription mode, the instruction callback issued by the speech software development kit; and
controlling, when the instruction callback is detected, the on/off state of the corresponding route preference switch control based on the instruction callback.

4. The speech interaction method of claim 3, wherein said controlling the on/off state of the corresponding route preference switch control based on the instruction callback comprises:
converting the instruction callback into a speech control event in response to the instruction callback;
converting the speech control event to generate a modification command; and
executing the modification command to control the on/off state of the route preference switch control.

5. The speech interaction method of claim 2, further comprising, after receiving the instruction callback issued by the speech software development kit based on the route change instruction:
generating a command for exiting the surround reality for autonomous driving when the map client is currently in the mode of the surround reality for autonomous driving; and
controlling the map client to exit the surround reality for autonomous driving based on the command for exiting the surround reality for autonomous driving so as to display a standard map interface.

6. The speech interaction method of claim 2, wherein said generating the target planned route corresponding to the speech request based on the switched on/off state of the route preference switch control comprises:
determining at least one route that meets a condition corresponding to the on/off state of the route preference switch control as the target planned route.

7. The speech interaction method of claim 2, further comprising:
generating configuration information of the map client based on the on/off state of the route preference switch control; and
sending the configuration information to the server to enable the server to synchronize the configuration information to corresponding user information, wherein the map client is configured to acquire the configuration information in the corresponding user information from the server based on a current login user.

8. The speech interaction method of claim 2, further comprising, after acquiring the speech request of the user:
sending the speech request to the server, so that when the speech request is related to the route preference of the user, the server performs matching for the speech request in a preset knowledge base in response to the speech request, and generates the route change instruction when a match exists; and
receiving, by the speech software development kit, the route change instruction returned by the server.

9. The speech interaction method of claim 8, wherein the server generates feedback information when a match does not exist, and the speech interaction method further comprises:
providing a voice and/or display reminder in response to the feedback information sent by the server.

10. A speech interaction apparatus, wherein a transportation means communicates with a server, a speech software development kit is preset on a map client of the transportation means, and the speech interaction apparatus comprises:
an acquisition module, configured to acquire a speech request of a user, the speech request being related to a route preference of the user;
a first generation module, configured to receive, after the speech software development kit receives a route change instruction generated and returned by the server in response to the speech request, an instruction callback issued by the speech software development kit based on the route change instruction;
a control module, configured to switch an on/off state of a route preference switch control on the map client based on the instruction callback; and
a second generation module, configured to generate a target planned route corresponding to the speech request based on the switched on/off state of the route preference switch control.

11. A speech interaction system, comprising a transportation means and a server, wherein:
the transportation means comprises a map client, and a speech software development kit is preset on the map client;
the map client is configured to acquire a speech request of a user, and transmit the speech request to the server through the speech software development kit;
the server is configured to receive the speech request from the map client, generate a route change instruction based on the speech request, and transmit the route change instruction back to the transportation means; and
the map client is further configured to receive, after the speech software development kit receives the route change instruction generated and returned by the server in response to the speech request, an instruction callback issued by the speech software development kit based on the route change instruction, switch an on/off state of a route preference switch control on the map client based on the instruction callback, and generate a target planned route corresponding to the speech request based on the switched on/off state of the route preference switch control.

12. The speech interaction system of claim 11, wherein the server comprises a preset knowledge base and is configured to:
perform semantic recognition on the speech request to obtain text data;
perform matching for the text data in the preset knowledge base; and
generate the route change instruction when a match for the text data exists in the preset knowledge base; or
generate feedback information when a match for the text data does not exist in the preset knowledge base.

13. A transportation means, comprising a memory and a processor, wherein the memory has a computer program stored thereon which, when executed by the processor, implements the speech interaction method of any one of claims 1 to 9.

14. A non-volatile computer-readable storage medium comprising a computer program which, when executed by one or more processors, implements the speech interaction method according to any one of claims 1 to 9.
